# EUROPEAN PATENT APPLICATION

(11) **EP 1 843 416 A1**
(43) Date of publication of application: **10.10.2007**
(21) Application number: 06715497.1
(22) Date of filing: 03.03.2006
(51) Int. Cl.: H01M 4/90, H01M 8/10

(54) **FUEL CELL**

(30) Priority: 07.03.2005 JP 2005062671
(71) Applicant: DAIHATSU MOTOR COMPANY, LTD., Ikeda-shi, Osaka-fu 563-8651 (JP)
(72) Inventor: ASAZAWA, Koichiro2c/o SHIGA TECHNICAL CENTER of DA, cho, Gamo-gun, Shiga, 5202593 (JP); YAMADA, Koji2c/o SHIGA TECHNICAL CENTER of DAIHATS, Gamo-gun, Shiga, 5202593 (JP); TANAKA, Hirohisa2c/o SHIGA TECHNICAL CENTER of DAI, ho, Gamo-gun, Shiga, 5202593 (JP)
(74) Representative: Kramer - Barske - Schmidtchen
(86) International application number: PCT/JP2006/304676
(87) International publication number: WO 2006/095840

(57) **Abstract**

The present invention concerns a fuel cell 1 comprising an electrolyte layer 4 made of an anion exchange membrane and a fuel side electrode 2 and an oxygen side electrode 3 disposed opposed to each other with the electrolyte layer 4 interposed therebetween, wherein the fuel side electrode 2 comprises cobalt incorporated therein as a metal catalyst. Further, as a fuel there is used a compound containing at least hydrogen and nitrogen such as hydrazine.

## Description

### TECHNICAL FIELD

The present invention relates to a fuel cell and more particularly to a solid polymer type fuel cell.

### BACKGROUND ART

As fuel cells there have been heretofore known various types such as alkaline type (AFC), solid polymer type (PEFC), phosphoric acid type (PAFC), molten carbonate type (MCFC) and solid electrolyte type (SOFC) . Among these types, the solid polymer type fuel cell can be operated at relatively low temperatures and thus has been studied for use in various purposes such as automobile use.

In such a solid polymer type fuel cell, a fuel side electrode into which a fuel is supplied and an oxygen side electrode into which oxygen is supplied are disposed opposed to each other with an electrolyte layer made of a solid polymer membrane interposed therebetween, and it is known that in the case where the solid polymer membrane is an anion exchange membrane, hydrazine is supplied into the fuel side electrode as a fuel (see, e.g., Patent Reference 1).

Further, in the case where the electrolyte layer is a solid polymer membrane made of an anion exchange membrane, it is necessary that the fuel and hydroxide ions be reacted to produce electron, and such a fuel side electrode normally contains a metal catalyst made of a platinum group element (see, e.g., Patent Reference 2).
Patent Reference 1: JP-A-61-42875
Patent Reference 2: JP-A-7-90111

However, in order to react the fuel with hydroxide ions at the fuel side electrode to produce electron, there are used two types of reaction, i.e., one-stage reaction involving the direct reaction of the fuel with hydroxide ions and two-stage reaction involving the decomposition of the fuel to hydrogen and nitrogen followed by the reaction of hydrogen thus produced by decomposition with hydroxide ions. The two-stage reaction involves the decomposition of the fuel to hydrogen and nitrogen at first, causing the loss of energy for the decomposition reaction. Therefore, it causes the drop of percent fuel utilization or the rise of calorie, inevitably leading to the deterioration of electricity generating performance.

However, since the platinum group elements are expensive and can easily cause the aforementioned decomposition reaction, the solid polymer type fuel cell comprising an electrolyte layer made of an anion exchange membrane is disadvantageous in that the enhancement of its electricity generating performance cannot be attained so much.

### DISCLOSURE OF THE INVENTION

An object of the present invention is to provide a fuel cell comprising a compound containing at least hydrogen and nitrogen as a fuel and an anion exchange membrane as an electrolyte layer which allows both cost reduction and enhancement of electricity generating performance at the same time.

In order to accomplish the aforementioned object, the present invention are as follows :
(1) A fuel cell comprising :
   an electrolyte layer which is an anion exchange membrane;
   a fuel side electrode into which a fuel including a compound containing at least hydrogen and nitrogen is supplied and an oxygen side electrode into which oxygen is supplied, the fuel side electrode and oxygen side electrode being disposed opposed to each other with the electrolyte layer interposed therebetween;
   a fuel supplying member disposed opposed to the fuel side electrode on the opposite side to the electrolyte layer for supplying the fuel into the fuel side electrode; and
   an oxygen supplying member disposed opposed to the oxygen side electrode on the opposite side to the electrolyte layer for supplying oxygen into the oxygen side electrode, characterized in that the fuel side electrode contains cobalt metal.
(2) The fuel cell as described in (1),
   characterized in that the cobalt metal is a fine powder of cobalt metal.
(3) The fuel cell as described in (2),
   characterized in that the specific surface area of the fine powder of cobalt metal is from 5 to 60 m²/g.
(4) The fuel cell as described in (2) or (3), characterized in that the content of the aforementioned fine powder of cobalt metal is from 0.1 to 10.0 mg/cm².
(5) The fuel cell as described in (1),
   characterized in that the fuel side electrode has cobalt metal supported on carbon.
(6) The fuel cell as described in (5),
   characterized in that the specific surface area of the cobalt metal is from 6 to 140 m²/g.
(7) The fuel cell as described in (5) or (6),
   characterized in that the supported amount of the cobalt metal is from 0.1 to 10.0 mg/cm².
(8) The fuel cell as described in any one of (1) to (7), characterized in that the fuel is a hydrazine.
(9) The fuel cell as described in any one of (1) to (8), characterized in that the oxygen side electrode contains silver.
(10) The fuel cell as described in (9), characterized in that the supported amount of the silver is from 0.1 to 10 mg/cm².

In accordance with the fuel cell of the present invention, the fuel side electrode contains cobalt, making it possible to inhibit the decomposition reaction of the fuel and cause hydroxide ions to directly react the fuel which has been supplied into the fuel side electrode while attaining cost reduction.

Therefore, the enhancement of percent fuel utilization and the suppression of calorific value can be realized, hence making it possible to enhance the electricity generating performance. Further, since a high activity can be obtained in the vicinity of ordinary temperature (30°C), the fuel cell of the invention is useful particularly as fuel cell for use in small-sized portable devices that operate at a temperature in the vicinity of ordinary temperature, for example.

Moreover, since the electrolyte layer is in an alkaline atmosphere, the elution of cobalt can be eliminated, making it possible to enhance the durability of the fuel side electrode.

Further, in the case where the oxygen side electrode contains silver, the enhancement of the output properties can be attained while accomplishing cost reduction.

### BRIEF DESCRIPTION OF THE DRAWINGS

FIG. 1 is a schematic configurational diagram illustrating an embodiment of implementation of the fuel cell of the invention.
FIG. 2 is a graph illustrating the results of measurement of the activity of the fuel side electrode.
FIG. 3 is a graph illustrating the results (current-output properties) of measurement of the electricity generating properties of the cell.
FIG. 4 is a graph illustrating the results (current-voltage properties) of measurement of the electricity generating properties of the cell.
FIG. 5 is a graph illustrating the comparison of the fuel cell of the present invention and a conventional fuel cell in current-voltage properties.
FIG. 6 is a graph illustrating the comparison of the fuel cell of the present invention and a conventional fuel cell in current-output properties.

### BEST MODE FOR CARRYING OUT THE INVENTION

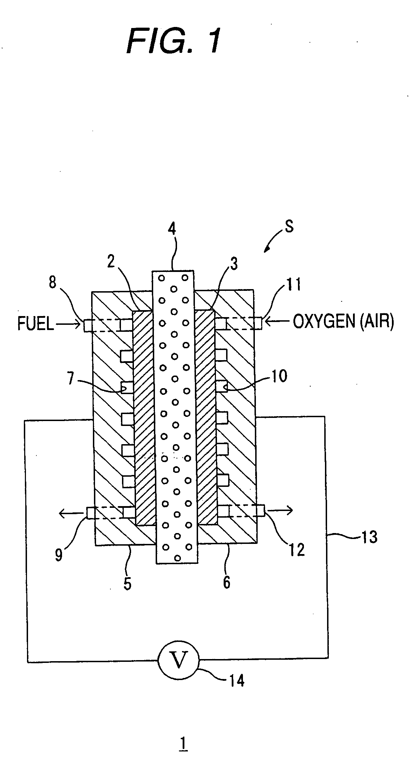

FIG. 1 is a schematic configurational diagram illustrating an embodiment of implementation of the fuel cell of the invention. In FIG. 1, this fuel cell 1 comprises a cell S for fuel cell, the cell S for fuel cell comprises a fuel side electrode 2, an oxygen side electrode 3 and an electrolyte layer 4, and the fuel side electrode 2 and the oxygen side electrode 3 are disposed opposed to each other with the electrolyte layer 4 interposed therebetween.

The fuel side electrode 2 is disposed opposed to one side of the electrolyte layer 4. This fuel side electrode 2 is not specifically limited except that it contains cobalt (Co), preferably only cobalt, as a metal catalyst, and may be formed by a fine powder of cobalt metal or may be formed in such an arrangement that cobalt metal is supported on carbon.

The fine powder of cobalt metal can be defined as, e.g., fine powder having an average particle diameter of primary particles, less than 1µm. The average particle diameter indicates the average of crystal diameters measured by X-ray diffraction method or primary particle diameters determined by the morphological observation under transmission electron microscope, and the particle diameter determined by sedimentation method involving laser diffraction, for example, increases as the primary particles are agglomerated, but these particle diameters are excluded.

Further, the specific surface area of such a fine powder of cobalt metal is from 5 to 60 m²/g, for example.

The method for the formation of the fuel side electrode 2 from the fine powder of cobalt metal is not specifically limited, but a membrane-electrode assembly, for example, is formed. The membrane- electrode assembly can be formed by a known method. For example, firstly, a fine powder of cobalt metal and
an electrolyte solution are mixed, and then optionally adjusted in its viscosity with a proper solvent such as alcohol to prepare a dispersion of a fine powder of cobalt metal. Subsequently, the dispersion is spread over the surface of the electrolyte layer 4 (anion exchange membrane) to fix the fine powder of cobalt metal to the surface of the electrolyte layer 4.

The content of the fine powder of cobalt metal is from 0.1 to 10 mg/cm², for example.

Further, in order to allow cobalt metal to be supported on carbon, a solution or slurry of an inorganic salt of cobalt such as cobalt nitrate, for example, is prepared, and the solution or slurry is then allowed to penetrate a porous carbon carrier which is then calcined in a reducing atmosphere.

The cobalt metal to be supported has an average primary particle diameter of from 5 nm to 100 nm, for example, and a specific surface area of from 6 to 140 m²/g, for example. Further, the supported amount of cobalt metal is from 0.1 to 10.0 mg/cm², for example, and preferably from 0.5 to 5.0 mg/cm².

In this fuel side electrode 2, a compound containing at least hydrogen and nitrogen (hereinafter referred to as "fuel compound") which has been supplied and hydroxide ions (OH⁻) which has passed through the electrolyte layer 4 react with each other to produce electron (e⁻), nitrogen (N₂) and water (H₂O) as described later.

The oxygen side electrode 3 is disposed opposed to and in contact with the other side of the electrolyte layer 4. This oxygen side electrode 3 is not specifically limited but is in the form of a porous electrode having a catalyst supported thereon, for example.

The catalyst is not specifically limited so far as it has a catalytic action of producing hydroxide ions (OH⁻) from oxygen (O₂) and water (H₂O) as described later but may be an element belonging to the group 8 to 10 (VIII) in the periodic table such as element of the platinum group (Ru, Rh, Pd, Os, Ir, Pt) and element of the iron group (Fe, Co, Ni), element of the group 11 (IB) such as Cu, Ag and Au or combination thereof. Preferred among these elements are Ag and Ni, more preferably Ag. The supported amount of the catalyst is from 0.1 to 10 mg/cm², for example, and preferably from 0.1 to 5 mg/cm². Further, the catalyst is preferably supported on carbon.

In this oxygen side electrode 3, oxygen (O₂) which has been supplied, water (H₂O) and electron (e⁻) which has passed through an external circuit 13 are reacted to produce hydroxide ions (OH⁻) as described later.

The electrolyte layer 4 is formed by an anion exchange membrane. The anion exchange membrane is not specifically limited so far as it is a medium through which the hydroxide ions (OH⁻) produced in the oxygen side electrode 3 can be moved from the oxygen side electrode 3 to the fuel side electrode 2 but may be a solid polymer membrane having an anion exchange group such as quaternary ammonium group and pyridinium group (anion exchange resin).

The cell S for fuel cell further comprises a fuel supplying member 5 and an oxygen supplying member 6. The fuel supplying member 5 is made of a gas-impermeable electrically-conductive member and one side thereof comes in contact with the fuel side electrode 2 opposed to the fuel side electrode 2. Further, this fuel supplying member 5 has a fuel side channel 7 formed therein for allowing the fuel to come in contact with the entire fuel side electrode 2 as a zigzag groove which is a depression on one side thereof. This fuel side channel 7 has a feed opening 8 and a discharge opening 9 formed connecting to the upstream end and the downstream end thereof, respectively, extending through the fuel supplying member 5.

Further, the oxygen supplying member 6, too, is made of a gas-impermeable electrically-conductive member and comes in contact with the oxygen side electrode 3 opposed to the oxygen side electrode 3 similarly to the fuel supplying member 5. Further, the oxygen supplying member 6, too, has an oxygen side channel 10 formed therein for allowing oxygen (air) to come in contact with the entire oxygen side electrode 3 as a zigzag groove which is a depression on one side thereof. This oxygen side channel 10, too, has a feed opening 11 and a discharge opening 12 formed connecting to the upstream end and the downstream end thereof, respectively, extending through the oxygen supplying member 6.

This fuel cell 1 is actually formed as a stack structure having a plurality of cells S for fuel cell stacked therein. Therefore, the fuel supplying member 5 and the oxygen supplying member 6 are actually formed as a separator having a fuel side channel 7 and an oxygen side channel 10 formed on the both sides thereof.

Though not shown, this fuel cell 1 comprises a current collector formed by an electrically-conductive material and is arranged such that the electromotive force generated in the fuel cell 1 can be externally withdrawn at the terminals provided in the current collector.

Further, empirically (on the order of model), the voltage generated can be measured by a voltmeter 14 provided in an external circuit 13 with which the fuel supplying member 5 and the oxygen supplying member 6 of this cell S for fuel cell are connected to each other.

In the present invention, the aforementioned fuel containing a fuel compound is directly supplied without undergoing reforming or the like.

In this fuel compound, hydrogen is preferably bonded directly to nitrogen. Further, the fuel compound preferably has a nitrogen-nitrogen bond and is free of carbon-carbon bond. Moreover, the number of carbon atoms in the fuel compound is preferably as small as possible, most preferably zero.

Further, such a fuel compound may contain oxygen atom, sulfur atom, etc., more particularly in the form of carbonyl group, hydroxyl group, hydrate, sulfonic acid group, sulfate or the like, so far as its properties cannot be impaired.

From this standpoint of view, specific examples of the fuel compound in the present invention include hydrazines such as hydrazine (NH₂NH₂), hydrated hydrazine (NH₂NH₂·H₂O), hydrazine carbonate ((NH₂NH₂)₂CO₂), hydrazine sulfate (NH₂NH₂-H₂SO₄), monomethyl hydrazine (CH₃NHNH₂), dimethyl hydrazine ((CH₃)₂NNH₂, CH₃NHNHCH₃) and carbon hydrazine ((NHNH₂)₂CO), urea (NH₂CONH₂), ammonia (NH₃), heterocycles such as imidazole, 1,3,5-triazine and 3-amino-1,2,4-triazole, and hydroxylamines such as hydroxylamine (NH₂OH) and hydroxylamine sulfate (NH₂OH·H₂SO₄). These fuel compounds may be used singly or in combination of two or more thereof. Preferably, hydrazines are used.

Among the fuel compounds, the compounds free of carbon, i.e., hydrazine (NH₂NH₂), hydrated hydrazine (NH₂NH₂·H₂O), hydrazine sulfate (NH₂NH₂·H₂SO₄), ammonia (NH₃), hydroxylamine(NH₂OH), hydroxylamine(NH₂OH-H₂SO₄)sulfate, etc. cannot be catalytically toxicated by CO as in the drazine reaction described later and thus can attain enhancement of durability, making it possible to realize actual zero emission.

As the fuel there may be the above exemplified fuel compound as it is, but the above exemplified fuel compound may be used in the form of solution in water and/or alcohol (e.g., lower alcohol such as methanol, ethanol, propanol and isopropanol).
In this case, the concentration of the fuel compound in the solution depends on the kind of the fuel compound but is from 1 to 90% by weight, for example, and preferably from 1 to 30% by weight.

Further, as the fuel there may be used the fuel compound in gas form (e.g., vapor).
When the fuel is supplied into the fuel side channel 7 of the fuel supplying member 5 while supplying oxygen (air) into the oxygen side channel 10 of the oxygen supplying member 6, electron (e⁻) which has been produced at the fuel side electrode 2 and moved through the external circuit 13, water (H₂O) and oxygen (O₂) react with each other at the oxygen side electrode 3 to produce hydroxide ions (OH⁻) as described below. The hydroxide ions (OH⁻) thus produced then migrate through the electrolyte layer 4 made of an anion exchange membrane from the oxygen side electrode 3 to the fuel side electrode 2. At the fuel side electrode 2, the hydroxide ions (OH⁻) which has passed through the electrolyte layer 4 and the fuel react with each other to produce electron (e⁻). The electron (e⁻) thus produced migrates through the external circuit 13 from the fuel supplying member 5 to the oxygen supplying member 6 from which it is then supplied into the oxygen side electrode 3. The electrochemical reaction at the fuel side electrode 2 and the oxygen side electrode 3 causes the generation of an electromotive force to make electricity generation.

These electrochemical reactions include two types of reaction, i.e., one-stage reaction which comprises reacting a fuel directly with hydroxide ions (OH⁻) at the fuel side electrode 2 and two-stage reaction which comprises decomposing a fuel into hydrogen (H₂) and nitrogen (N₂), and then reacting the hydrogen (H₂) thus produced by decomposition with hydroxide ions (OH⁻).

For example, in the case where as the fuel there is used hydrazine (NH₂NH₂), the one-stage reaction can be represented by the following reaction formulas (1) to (3) as the reaction at the fuel side electrode 2, the reaction at the oxygen side electrode 3 and the reaction as a whole, respectively:
(1) NH₂NH₂ + 40H⁻ → 4H₂O + N₂ + 4e⁻ (Fuel side electrode)
(2) O₂ + 2H₂O + 4e⁻ → 4OH⁻ (Oxygen side electrode)
(3) NH₂NH₂ + O₂ → 2H₂O + N₂ (As a whole)
   The two-stage reaction can be represented by the following reaction formulas (4) to (7) as the reaction at the fuel side electrode 2, the reaction at the oxygen side electrode 3 and the reaction as a whole, respectively:
(4) NH₂NH₂ → 2H₂ + N₂ (Decomposition reaction; fuel side electrode)
(5) H₂ + 20H⁻ → 2H₂O + 2e⁻ (Fuel side electrode)
(6) 1/2O₂ + H₂O + 2e⁻ → 20H⁻ (Oxygen side electrode)
(7) H₂ + 1/2O₂ → H₂O (As a whole)

As shown in the aforementioned reaction formula (4), in the two-stage reaction, hydrazine (NH₂NH₂) decomposes to hydrogen (H₂) and nitrogen (N₂) at first, causing the loss of energy for the decomposition reaction. Therefore, when the ratio of the two-stage reaction to the one-stage reaction increases, it causes the drop of percent fuel utilization or the rise of calorie, inevitably leading to the deterioration of electricity generating performance.

However, the platinum group element, particularly platinum, which has heretofore been contained in the fuel side electrode 2 as a metal catalyst is expensive but can easily cause the decomposition represented by the aforementioned formula (4) and thus has a limit to the enhancement of the electricity generating performance.

However, in this fuel cell 1, the fuel side electrode 2 contains cobalt as a metal catalyst as mentioned above. This cobalt is less expensive than the platinum group element such as platinum and can suppress the decomposition reaction (decomposition reaction represented by the aforementioned formula (4)) of a fuel (hydrazine in the aforementioned example) to accelerate the direction reaction (reaction represented by the aforementioned formula (1)) of the fuel with hydroxide ions (OH⁻). Thus, the enhancement of percent fuel utilization and the suppression of calorie can be realized while attaining cost reduction, hence making it possible to enhance the electricity generating performance.

The operating conditions of this fuel cell 1 are not specifically limited, but, for example, the pressure at the fuel side electrode 2 side is predetermined to be 200 kPa or less, preferably 100 kPa or less, the pressure at the oxygen side electrode 3 side is predetermined to be 200 kPa or less, preferably 100 kPa or less, and the temperature of the cell S for fuel cell is predetermined to be from 0°C to 120°C, preferably from 20°C to 80°C.

While the present invention has been with reference to embodiments of implementation of the present invention have been described above, embodiments of implementation of the present invention are not limited thereto, and the design can be modified without changing the essence of the present invention.

Examples of the use of the fuel cell of the present invention include power supply for driving motor in automobile, ship, aircraft, etc., and power supply in communications terminal such as cellular phone.

The present invention will be described in connection with examples and comparative examples, but the present invention is not limited to the following examples.

### <Measurement of activity of fuel side electrode>

A test piece was prepared each for three fuel side electrodes made of fine powder of cobalt metal, carbon having cobalt supported thereon and carbon having platinum supported thereon, respectively, and measured for activity.

The test piece of fuel side electrode made of a fine powder of cobalt (Co) was prepared by properly dispersing a mixture of a cobalt nanopowder (average particle diameter: 28 nm; specific surface area: 50 m²/g; produced by Junye Nano Material Co.) and an anion exchange resin in an organic solvent such as alcohol to prepare an ink, weighing out 1 µL of the ink thus obtained by a micropipette, dropping the ink onto a glassy carbon electrode, and the drying the ink.

The test piece of fuel side electrode made of a carbon having cobalt supported thereon (Co/C) was prepared by dipping an aqueous solution of cobalt nitrate in carbon (Vulcan XC-72; specific surface area: 250 m²/g), calcining the carbon in a reducing atmosphere to produce a powder, properly dispersing a mixture of the powder thus obtained and an anion exchange resin in an organic solvent such as alcohol to prepare an ink, weighing out 1 µL of the ink thus obtained by a micropipette, dropping the ink onto a glassy carbon electrode, and the drying the ink.

The test piece of carbon electrode having platinum supported thereon (Pt/C) was prepared by properly dispersing a mixture of a electrode catalyst for PEFC (TEC10V50E, produced by Tanaka Kikinzoku Kogyo Co., Ltd.) and an anion exchange resin in an organic solvent such as alcohol to prepare an ink, weighing out 1 µL of the ink thus obtained by a micropipette, dropping the ink onto a glassy carbon electrode, and the drying the ink.

The activity of the fuel side electrode was measured by determining the oxidation potential of hydrazine by cyclic voltanmetry using a rotary disc electrode. In some detail, the aforementioned test piece of fuel side electrode was stabilized in a 1 N aqueous solution of KOH, and then dipped in a 1 N aqueous solution of KOH containing hydrated hydrazine in a proportion of 1 mol/L in which it was then measured for activity. As a counter electrode there was used a platinum wire and as a reference electrode there was used a silver-silver chloride electrode. The scanning range of activity measurement was from -1.2 to -1V for Co, from -1.2 to -0.8 V for Co/C and from -1.0 to -0.9 V for Pt/C (with respect to Ag/AgCl).

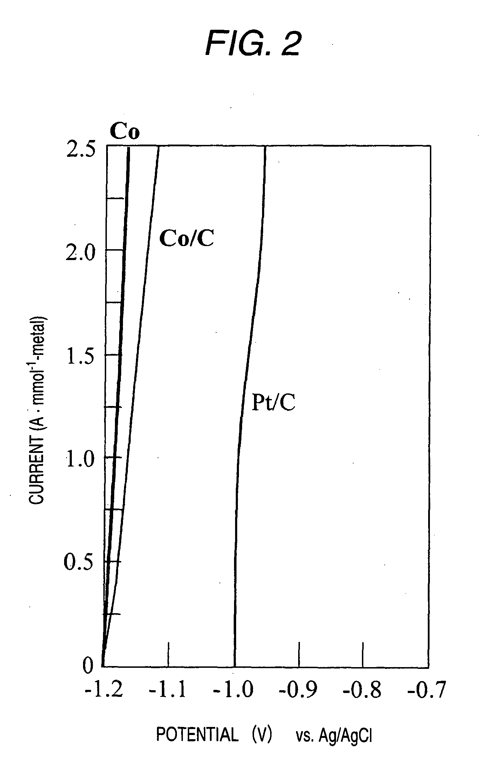

The results of activity measurement (cathodic sweep) are shown in FIG. 2.

As shown in FIG. 2, Co and Co/C showed a rise at a low potential and hence little voltage loss (overvoltage) as compared with Pt/C, which is ordinary as a catalyst for fuel side electrode. Further, a higher current was obtained at the same potential.

### <Measurement of electricity generating performance of cell>

A cell unit of anion exchange membrane-electrode assembly was prepared each for three oxygen side electrodes, i.e., carbon having silver supported thereon, carbon having platinum supported thereon and carbon having nickel supported thereon using a fuel side electrode of fine powder of cobalt metal, and these cell units were then measured for electricity generating performance.

For the preparation of the anion exchange membrane-electrode assembly, a cobalt nanopowder (average particle diameter: 28 nm; specific surface area: 50 m²/g; produced by Junye Nano Material Co.) and an anionic exchange resin were mixed, the mixture thus obtained was properly dispersed in an organic solvent such as alcohol to prepare an ink, and the ink thus obtained was then directly spread over one surface of an anion exchange membrane to integrally form a fuel side electrode (Co) on the one surface. Subsequently, a carbon powder having 50% by weight of silver supported thereon obtained by impregnating carbon (Vulcan XC-72; specific surface area: 250 m²/g) with an aqueous solution of silver nitrate, and then calcining the carbon in a reducing atmosphere, a carbon powder having platinum supported thereon (electrode catalyst for PEFC; TEC10V50E, produced by Tanaka Kikinzoku Kogyo Co., Ltd.) or a carbon powder having 50% by weight of nickel powder supported thereon obtained by impregnating carbon with an aqueous solution of nickel nitrate (Vulcan XC-72), and then calcining the carbon in a reducing atmosphere and an anion exchange resin were mixed, the mixture thus obtained was properly dispersed in an organic solvent such as alcohol to prepare an ink, and the ink thus obtained was then directly spread over the other surface of the anion exchange membrane to integrally form an oxygen side electrode (Ag/C, Pt/C or Ni/C) on the other surface.

The amount of catalyst supported on the oxygen side electrode and the amount of catalyst incorporated in on the fuel side electrode in the anion exchange membrane-electrode assembly are as follows.
(1) Fuel side electrode (Co): 2.6 mg/cm², oxygen side electrode (Ag/C): 2.6 mg/cm²
(2) Fuel side electrode (Co): 2.7 mg/cm², oxygen side electrode (Pt/C): 2.6 mg/cm²
(3) Fuel side electrode (Co): 2.6 mg/cm², oxygen side electrode (Ni/C): 2.6 mg/cm²

Subsequently, a carbon sheet of electrically-conductive porous material which is a gas diffusion layer was bonded to the both surfaces of the anion exchange membrane-electrode assembly thus obtained to prepare a single cell unit of fuel cell.

A 1N aqueous solution of KOH of 1 mol/dm³ of hydrated hydrazine and air were supplied into fuel side electrode and the oxygen side electrode of the single cell unit at a rate of 2 mL/min and 0.5 L/min, respectively. Referring to the operating conditions, the feeding pressure was 120 kPa·abs and the cell operating temperature was 30°C.

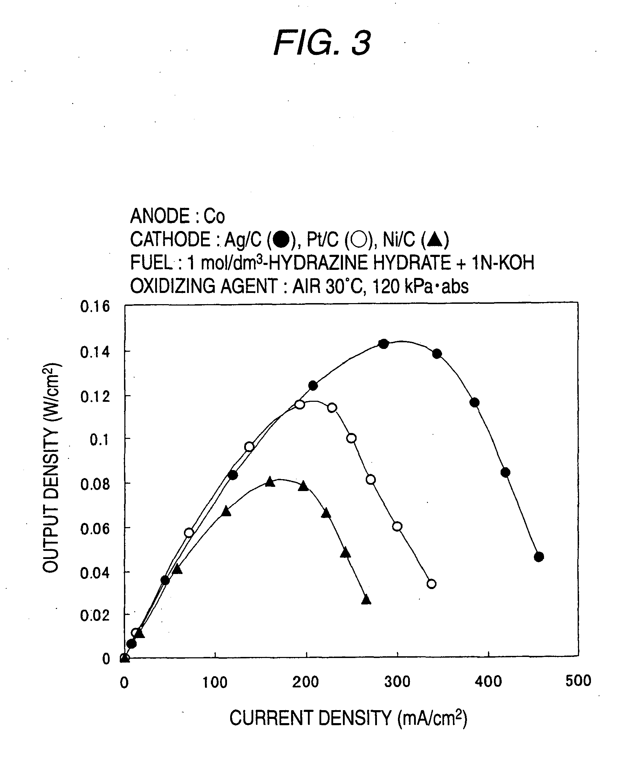

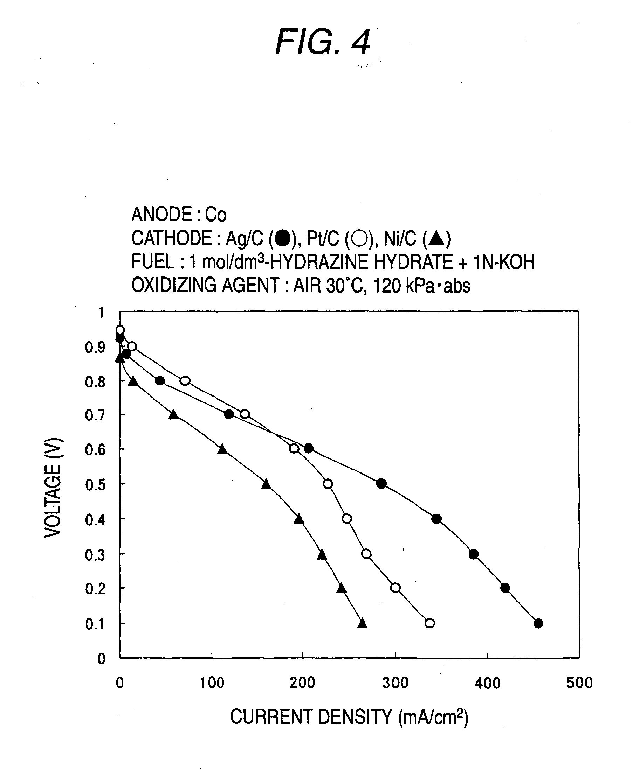

The current-output characteristics and the current-voltage characteristics obtained under the conditions are shown in FIG. 3 and FIG. 4, respectively.

As shown in FIG. 3 and FIG. 4, when the oxygen side electrode was Ag/C, it showed a high output density and excellent output characteristics. Further, when the oxygen side electrode was Ni/C, it showed deteriorated output characteristics as compared with the oxygen side electrode which is Pt/C, but since the price of Ni is extremely lower than that of Pt, Ni/C is advantageous in cost and showed sufficient output characteristics from the standpoint of cost effect.

Further, the output characteristics of a single cell unit comprising an anion exchange membrane-electrode assembly composed of a fuel side electrode made of a fine powder of cobalt metal (Co) and an oxygen side electrode made of carbon having silver supported thereon (Ag/C) of the aforementioned (1) were compared with that of a single cell unit comprising a conventional direct methanol type fuel cell (DMFC).

As DMFC there were used two types, i.e., one comprising a polymer membrane which is an anion exchange membrane (anionic) and one comprising a polymer membrane which is a cation exchange membrane (cationic).

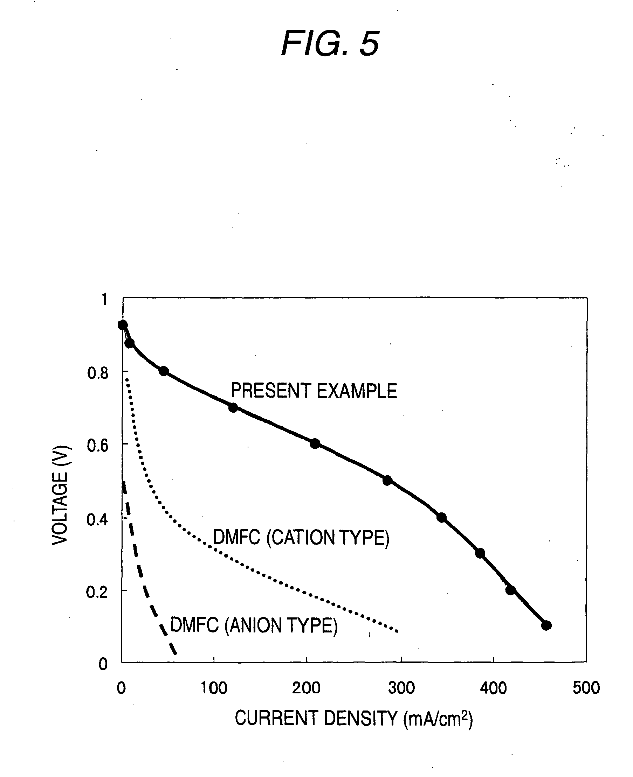

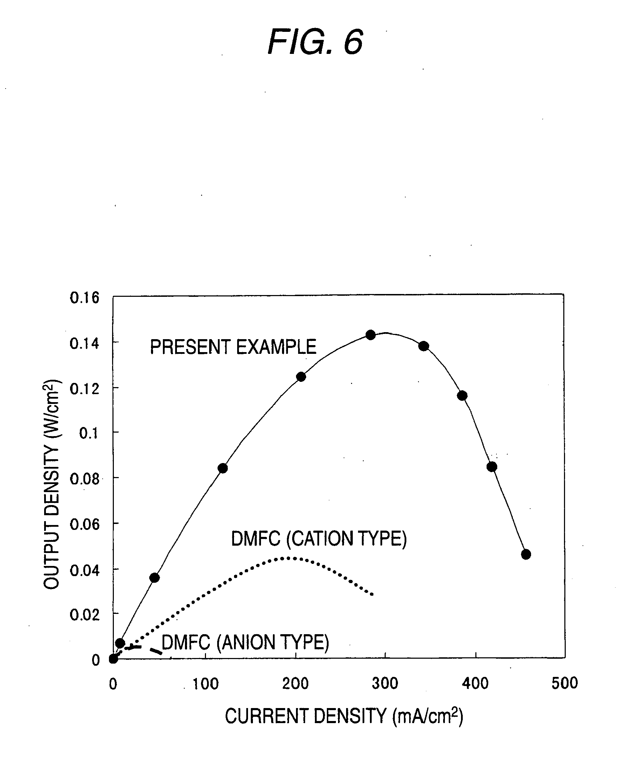

As shown in FIG. 5 and FIG. 6, the single cell unit of the aforementioned (1) (present example) was excellent in output characteristics as compared with both the anionic and cationic DMFC. In some detail, the voltage of the cationic DMFC at the highest output density was 0.2 V (efficiency: 17%) while that of the single cell unit of the aforementioned (1) (present example) was 0. 5 V (efficiency: 32%).

Further, the single cell unit of the aforementioned (1) (present example) was free of Pt or Ru, which is expensive, as an electrode catalyst and thus was inexpensive and was in the form of compact device as compared with DMFC.

The present invention is not limited to the foregoing description and various design changes can be made in the present invention within the scope of matters described in Claims.

### INDUSTRIAL APPLICABILITY

In accordance with the fuel cell of the present invention, the enhancement of percent fuel utilization and the suppression of calorie can be realized, hence making it possible to enhance the electricity generating performance.

## Claims

1. A fuel cell comprising:
an electrolyte layer which is an anion exchange membrane;
a fuel side electrode into which a fuel including a compound containing at least hydrogen and nitrogen is supplied and an oxygen side electrode into which oxygen is supplied, the fuel side electrode and oxygen side electrode being disposed opposed to each other with the electrolyte layer interposed therebetween;
a fuel supplying member disposed opposed to the fuel side electrode on the opposite side to the electrolyte layer for supplying the fuel into the fuel side electrode; and
an oxygen supplying member disposed opposed to the oxygen side electrode on the opposite side to the electrolyte layer for supplying oxygen into the oxygen side electrode, **characterized in that** the fuel side electrode contains cobalt metal.

2. The fuel cell as described in Claim 1,
**characterized in that** the cobalt metal is a fine powder of cobalt metal.

3. The fuel cell as described in Claim 2,
**characterized in that** the specific surface area of the fine powder of cobalt metal is from 5 to 60 m²/g.

4. The fuel cell as described in Claim 2 or 3, **characterized in that** the content of the aforementioned fine powder of cobalt metal is from 0.1 to 10.0 mg/cm².

5. The fuel cell as described in Claim 1,
**characterized in that** the fuel side electrode has cobalt metal supported on carbon.

6. The fuel cell as described in Claim 5,
**characterized in that** the specific surface area of the cobalt metal is from 6 to 140 m²/g.

7. The fuel cell as described in Claim 5 or 6, **characterized in that** the supported amount of the cobalt metal is from 0.1 to 10.0 mg/cm².

8. The fuel cell as described in any one of Claims 1 to 7, **characterized in that** the fuel is a hydrazine.

9. The fuel cell as described in any one of Claims 1 to 8, **characterized in that** the oxygen side electrode contains silver.

10. The fuel cell as described in Claim 9, **characterized in that** the supported amount of the silver is from 0.1 to 10 mg/cm².
